# EUROPÄISCHE PATENTANMELDUNG

(11) **EP 2 712 147 A1**
(43) Veröffentlichungstag der Anmeldung: **26.03.2014**
(21) Anmeldenummer: 13184485.4
(22) Anmeldetag: 16.09.2013
(51) Int. Cl.: H04L 29/08

(54) **Verfahren zur Datenfernübertragung zu einem HLK (Heizung, Lüftung, Klima)-Gerät**

(30) Priorität: 21.09.2012 AT 10302012
(71) Anmelder: Vaillant GmbH, 42859 Remscheid (DE)
(72) Erfinder: Klaus, Dirk, 42499 Hückeswagen (DE)
(74) Vertreter: Popp, Carsten

(57) **Zusammenfassung**

Die Erfindung betrifft Verfahren zur Datenfernübertragung von einer Datenquelle (1) zu einem HLK-Gerät (5) über das Internet. Da die Steuerung (7) des HLK-Geräts (5) mittels einer Firewall (8) mit dem Internet verbunden ist, fragt die Steuerung (7) zyklisch über eine ungesicherte Verbindung und mit geringer Auslastung des Servers (3) eine Dateneintragung ab, ob eine Dateneinheit zur Verfügung steht. Erst wenn dies der Fall ist, wird über eine gesicherte Verbindung die Dateneinheit heruntergeladen.

## Beschreibung

Die Erfindung betrifft ein Verfahren zur Datenfernübertragung zu einem HLK-Gerät sowie ein HLK-Gerät zur Durchführung des Verfahrens. Moderne HLK-Geräte (Heizung, Lüftung, Klimatechnik) verfügen über eine Steuerung, die optional über das Internet mit einem externen Server verbunden sind. Unter dem Gattungsbegriff HLK-Gerät wird in diesem Zusammenhang eine Heizungsvorrichtung, Lüftungsvorrichtung, Klimavorrichtung, Kraft-Wärme-Kopplungsvorrichtung und/oder Solarkollektor verstanden. Ebenfalls wird im Zusammenhang mit der vorliegenden Erfindung auch ein Solarmodul verstanden. Ein gattungsgemäßes HLK-Gerät wird in der Regel im häuslichen Umfeld eingesetzt. Der Internetzugang wird dabei von einem vorhandenen Router zur Verfügung gestellt, der in der Regel über eine Firewall verfügt. Der Internetzugang ermöglicht es, dass das HLK-Gerät Störungen an den externen Server überträgt. Diese Informationen stehen dann einem Servicetechniker zur Verfügung. Ebenfalls kann ein Servicetechniker Informationen und Daten zur Einstellung oder Fernwartung an die Steuerung übertragen.

Sollen vom externen Server Daten an die Steuerung übertragen werden, so scheitert dies an der Firewall, die keinen Zugriff von außen zulässt. Dies kann einerseits dadurch umgangen werden, dass die Firewall entsprechend konfiguriert wird. Dies ist aber in der Regel weder dem Betreiber des HLK-Geräts noch dem Fachhandwerker, der das HLK-Gerät entwickelt, zuzumuten. Außerdem führen Updates oder Austausch des Routers dazu, dass dieser Konfigurationsaufwand erneut vorgenommen werden muss.

Alternativ ist es möglich, dass die Steuerung im kleinen Zeitabständen regelmäßig versucht, von dem externen Server Daten herunterzuladen. Da das Herunterladen der Daten aus Sicherheitsgründen über eine verschlüsselte Verbindung erfolgen muss, da zum Teil sicher-heitsrelevante Einstellungen an der Steuerung manipuliert werden könnten, ist die Übertragung sowohl auf der Seite der Steuerung als auch auf der Seite des externen Servers mit einer Belastung der CPU sowie mit einem hohen Datenverkehr verbunden.

Bei einer Vielzahl eingesetzte HLK-Geräte führt dies zu einer hohen Gesamtbelastung des gemeinsamen externen Servers. Um diesem Problem zu begegnen, müsste die Frequenz, mit der die HLK-Geräte auf den Server zugreifen, reduziert werden. Dies führt zu einem verzögerten Übertragen der Daten.

Es ist daher Aufgabe der Erfindung, ein Verfahren zur Datenfernübertragung von einer externen Datenquelle zu der Steuerung eines HLK-Geräts sowie ein HLK-Gerät zur Durchführung dieses Verfahrens bereitzustellen, das auch dann hohe Reaktionsgeschwindigkeiten in der Datenübertragung ermöglicht, wenn die Steuerung des HLK-Geräts sich hinter einer Firewall befindet und eine große Anzahl von HLK-Geräten mit einem gemeinsamen Server kommunizieren.

Diese Aufgabe wird Erfindung gemäß dadurch gelöst, dass von der Datenquelle einen Dateneinheit auf einen Server übertragen wird und dieser Server eine Dateneintragung auf einer ungesicherten Internetverbindung zur Verfügung stellt. Das HLK-Gerät fragt mit hoher Frequenz den externen Server ab, ob eine solche Dateneintragung vorliegt. Nur dann, wenn dies der Fall ist, wird vom HLK-Gerät eine gesicherte Verbindung mit dem Server aufgebaut und die Dateneinheit herunter geladen. Danach setzt der Server die Datenübertragung zurück. Das HLK-Gerät fragt nach der erfolgten Datenübertragung erneut mit hoher Frequenz den externen Server ab. Dadurch, dass die Abfrage des HLK-Geräts auf einer ungesicherten Verbindung erfolgt, kann seitens des externen Servers eine Server-Software verwendet werden, die nur eine geringe Auslastung der CPU bewirkt. Da zu diesem Zeitpunkt keine sicher-heitsrelevanten Informationen übertragen werden, ist eine ungesicherte Verbindung ausreichend. Erst dann, wenn wirklich eine Übertragung von Daten stattfindet, wird auf eine gesicherte Verbindung gewechselt und die Dateneinheit übertragen. Unter gesicherte Verbindung ist hier zu verstehen, dass die Daten verschlüsselt werden und/oder der Server sich gegenüber dem HLK-Gerät authentifiziert und/oder das HLK-Gerät sich gegenüber dem Server authentifiziert.

Beide Verbindungen können von einem Server zur Verfügung gestellt werden. Dies kann entweder durch einen gemeinsamen Prozess oder durch 2 Prozesse erfolgen. In einer bevorzugten Weiterbildung der Erfindung wird die Dateneintragung und die Dateneinheit von 2 verschiedenen Servern bereitgestellt.

In einer Variante des Verfahrens wird zusammen mit der Dateneintragung die Internetadresse übertragen, von der die Dateneinheit geladen werden kann. In einer anderen Variante des Verfahrens ist die Internetadresse, von der die Dateneinheit geladen werden kann, in dem HLK-Gerät fest hinterlegt.

Durch das erfindungsgemäße Verfahren kann auch bei vielen HLK-Geräten, die Daten von einem Server abrufen, dies mit hoher Frequenz erfolgen. Dies ist mindestens alle 60 s, bevorzugt mindestens alle 10 s. Dadurch werden kurze Reaktionszeiten erreicht.

Ein erfindungsgemäßes HLK-Gerät zur Durchführung des Verfahrens umfasst eine Steuerung, die ein Computerprogramm enthält, das Softwaremittel zur Durchführung der Verfahrensschritte "zyklische Abfrage der Dateneintragung" und "Herunterladen der Dateneinheit" aufweist.

In einer Weiterbildung weist das Computerprogramm Softwaremittel zur Durchführung weiteren Verfahrensschritte und Verfahrensvarianten.

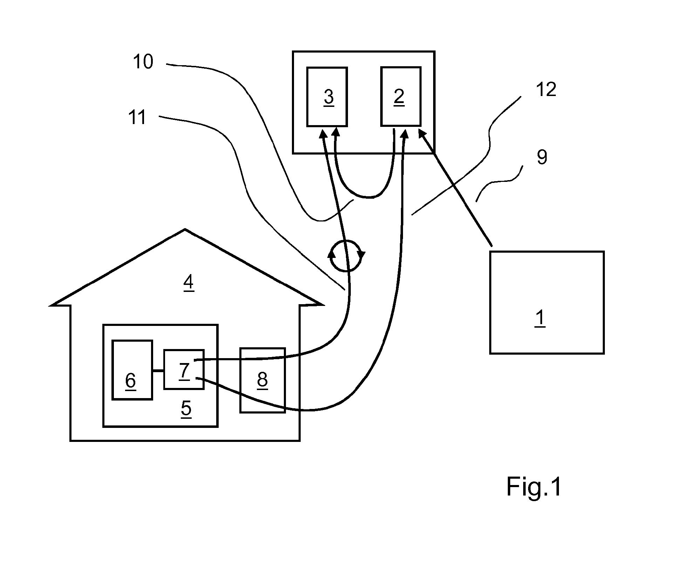

Die Erfindung wird nun anhand der Figur 1 detailliert erläutert.

Eine Dateneinheit soll von einer Datenquelle 1 zu einer Steuerung 7 eines HLK-Geräts 5 übertragen werden, wobei die Steuerung 7 über eine Firewall 8 mit dem Internet verbunden ist. Die Firewall 8 blockiert einen direkten Zugriff von der Datenquelle 1 auf die Steuerung 7. daher wird erfindungsgemäß die zu übertragende Dateneinheit an einen Server 2 in Form einer Datenübertragung 9 übermittelt. Der Server 2 stellt die Dateneinheit zum Download über eine gesicherte Verbindung zur Verfügung. Über eine Verbindung 10 wird auf einem weiteren Server 3 eine Dateneintragung hinterlegt, auf die über eine ungesicherte Verbindung zugegriffen werden kann. Server 2 und Server 3 können entweder zwei verschiedene Computer, ein gemeinsamer Computer auf dem 2 verschiedene Serverprogramme laufen oder ein gemeinsamer Computer mit einem gemeinsamen Serverprogramm sein.

Die Figur 1 stellt ein Gebäude 4 mit einem HLK-Gerät 5 dar. Das HLK-Gerät 5 enthält eine Vorrichtung 6 und eine Steuerung 7. Die Vorrichtung 6 kann eine Heizungsvorrichtung, eine Lüftungsvorrichtung, eine Klimavorrichtung, ein Solarmodul, ein Solarkollektor und/oder eine Vorrichtung zur Kraft-Wärmekopplung umfassen. Die Steuerung 7 ist über eine in einem Router enthaltene Firewall 8 mit dem Internet verbunden. Die Steuerung 7 greift über eine ungesicherte Verbindung zyklisch, beispielsweise mindestens alle 10 Sekunden, auf eine auf einem Server 3 hinterlegte Dateneintragung zu. Diese Abfrage ist mit einem Pfeil mit dem Bezugszeichen 11 dargestellt. Sobald die Dateneintragung angezeigt, dass eine Dateneinheit zur Verfügung steht, greift die Steuerung 7 auf die Dateneinheit auf dem Server 2 zu. Dieser Zugriff ist mit einem Pfeil mit dem Bezugszeichen 12 dargestellt.

Bei der Dateneinheit kann es sich beispielsweise um Konfigurationsdaten oder um Parameter für das HLK-Gerät handeln, die vom Hersteller oder vom Serviceunternehmen bereitgestellt werden. Dies kann im Fall einer Heizungsvorrichtung eine geänderte Heizungskennlinie sein, im Fall eines Solarmoduls oder Solarkollektors prognostizierte Sonnenscheinstunden oder im Falle einer Vorrichtung zur Kraft-Wärmekopplung Energiepreis-Daten. Ebenfalls möglich sind Software-Updates etc.

### Bezugszeichenliste

- 1: Datenquelle
- 2: Server
- 3: Server
- 4: Gebäude
- 5: HLK-Gerät
- 6: Vorrichtung
- 7: Steuerung
- 8: Firewall
- 9: Datenübertragung der Dateneinheit von der Datenquelle zum Server
- 10: Bereitstellen der Dateneintragung
- 11: Zyklische Abfrage der Dateneintragung
- 12: Herunterladen der Dateneinheit

## Patentansprüche

1. Verfahren zur Datenfernübertragung von einer Datenquelle (1) zu einem HLK-Gerät (5), wobei das HLK-Gerät (5) eine Heizungsvorrichtung, eine Lüftungsvorrichtung, eine Klimavorrichtung, ein Solarmodul, einen Solarkollektor und/oder eine Vorrichtung zur Kraft-Wärmekopplung (6) umfasst und wobei das HLK-Gerät (5) eine Steuerung (7) mit Internetzugang umfasst, **gekennzeichnet durch** die Schritte
i) Übertragen einer Dateneinheit von der Datenquelle (1) zu einem Server (2),
ii) Bereitstellen der Dateneinheit **durch** den Server (2) über eine gesicherte Internetverbindung,
iii) Bereitstellen einer Dateneintragung **durch** den Server über eine ungesicherte Internetverbindung, die die Verfügbarkeit der Dateneinheit anzeigt.
sowie **durch** die Schritte
I) zyklische Abfrage der Dateneintragung des Servers **durch** die Steuerung (7) über eine ungesicherte Internetverbindung,
II) Herunterladen der Dateneinheit vom Server (2) **durch** die Steuerung (7) über eine gesicherte Internetverbindung, sobald die Dateneinheit eine verfügbare Dateneinheit anzeigt,
III)Zurücknehmen der Dateneintragung **durch** den Server nach dem Herunterladen.

2. Verfahren nach Anspruch 1, wobei die Dateneintragung und die Dateneinheit von zwei verschiedenen Servern (2, 3) bereitgestellt wird.

3. Verfahren nach Anspruch 1 oder 2, wobei die gesicherte Internetverbindung verschlüsselt erfolgt.

4. Verfahren nach einem der Ansprüche 1 bis 3, wobei die gesicherte Internetverbindung von einer Internetadresse erfolgt, die mit der Dateneintragung festgelegt wird.

5. Verfahren nach einem der Ansprüche 1 bis 3, wobei die gesicherte Internetverbindung von einer Internetadresse erfolgt, die in der Steuerung (7) hinterlegt ist.

6. Verfahren nach einem der vorhergehenden Ansprüche, wobei die zyklische Abfrage des Verfahrensschritts I) des Anspruchs 1 mindestens alle 60 Sekunden, bevorzugt mindestens alle 10 Sekunden erfolgt.

7. HLK-Gerät (5) zur Durchführung des Verfahrens nach einem der Ansprüche 1 bis 6, wobei das HLK-Gerät (5) eine Heizungsvorrichtung, eine Lüftungsvorrichtung, eine Klimavorrichtung, ein Solarmodul, einen Solarkollektor und/oder eine Vorrichtung zur Kraft-Wärmekopplung (6) enthält und wobei das HLK-Gerät eine Steuerung (7) enthält, wobei die Steuerung über einen Internetzugang verfügt, **dadurch gekennzeichnet, dass** die Steuerung (7) ein Computerprogramm enthält, das Softwaremittel zur Durchführung der Verfahrensschritte I) und II) des Anspruchs 1 aufweist.

8. HLK-Gerät nach Anspruch 7, wobei das Computerprogramm Softwaremittel zur Durchführung des Verfahrens nach einem der Ansprüche 3 bis 6 aufweist.
